# EUROPÄISCHE PATENTSCHRIFT

(11) **EP 1 365 543 B1**
(45) Veröffentlichungstag und Bekanntmachung des Hinweises auf die Patenterteilung: **17.12.2008**
(21) Anmeldenummer: 03004425.9
(22) Anmeldetag: 27.02.2003
(51) Int. Cl.: H04L 12/43, H04L 12/437, H04L 12/24, H04L 12/26, B60R 16/02

(54) **Verfahren und Vorrichtung zur Übertragung von Information und Fehlererkennung in einem ringförmigen Netzwerk**
Method and apparatus for transmitting information and detection of failures in a ring network
Méthode et dispositif pour la transmission d'informations et la détection d'erreurs dans un réseau en anneau

(30) Priorität: 22.05.2002 DE 10223007
(43) Veröffentlichungstag der Anmeldung: 26.11.2003
(73) Patentinhaber: ROBERT BOSCH GMBH, 70442 Stuttgart (DE)
(72) Erfinder: Boehl, Eberhard, 72768 Reutlingen (DE); Harter, Werner, 75428 Illingen (DE)

(56) Entgegenhaltungen:
- DE-A1- 19 633 744
- GB-A- 2 028 062
- US-A1- 2002 027 877

## Beschreibung

### Stand der Technik

Die Erfindung geht aus von einem Verfahren und einer Vorrichtung zur Übertragung von Information in einem Netzwerk sówie einem entsprechenden Netzwerk mit wenigstens drei Teilnehmern, wobei die Information in wenigstens einem ersten Rahmen vorgegebener Länge und Struktur übertragen wird gemäß den Oberbegriffen der unabhängigen Ansprüche.

In verteilten, insbesondere sicherheitsrelevanten Systemen oder Netzwerken ist ein Datenaustausch zwischen den beteiligten Teilnehmern nötig, der auch im Falle eines Fehlers noch zu sicheren Entscheidungen oder Bewertungen führt. D. h. der Fehler muss sicher erkannt werden, und es müssen entsprechende Maßnahmen eingeleitet werden, die einen Sicherheitsverlust oder Systemausfall vermeiden.

Solche verteilten sicherheitsrelevanten Systeme sind beispielsweise aus dem Fahrzeugbereich als X-by-Wire-Systeme bekannt. Die wichtigste Aufgabe dabei ist, die funktionale Sicherheit solcher Systeme zu gewährleisten. Dies ist in dem Artikel "X-by-Wire - Die sichere Alternative", aus der Auto- und Elektronik 2/2000 auf Seite 73 bis 75 beschrieben.

Weitere Systeme sind bekannt aus US 2002/0027877 A1 und DE 19633744 A1.

Üblicherweise werden die Informationen, insbesondere die Daten zwischen den Teilnehmern, durch direkte Verbindungen zu allen Teilnehmern ausgetauscht. Dabei werden die Netzwerke, insbesondere die zugrundeliegenden Bussysteme, im Allgemeinen mehrfach redundant ausgeführt, was zu großem Aufwand und begrenzter Felxibilität führt.

Es zeigt sich somit, dass der Stand der Technik nicht in jeder Hinsicht optimale Ergebnisse zu liefern vermag. Es ist daher Aufgabe der Erfindung, ein Verfahren und eine Vorrichtung zur Übertragung von Information in einem Netzwerk anzugeben, die einerseits optimale sicherheitsrelevante Entscheidungen und Wertungen zulässt und zum Anderen einen reduzierten Aufwand, insbesondere eine reduzierte Anzahl an Übertragungswegen, bei hoher Flexibilität aufweist.

Die Aufgabe wird gelöst durch ein Verfahren gemäß Anspruch 1, einer Vorrichtung gemäß Anspruch 16, sowie einem Netwerk gemäß Anspruch 19.

### Vorteile der Erfindung

Dazu wird von einem Verfahren und einer Vorrichtung zur Übertragung von Information in einem Netzwerk mit wenigstens drei Teilnehmern ausgegangen, wobei die Information in wenigstens einem ersten Rahmen vorgegebener Länge und Struktur übertragen wird und der erste Rahmen auf einem ersten Übertragungsweg ringförmig an den jeweils nächsten, zweiten Teilnehmer bei vorgegebener Übertragungsrichtung übertragen wird, wobei vorteilhafter Weise die Information zusätzlich in einem zweiten Rahmen gleicher Länge und Struktur wie der erste Rahmen übertragen wird, wobei der zweite Rahmen auf einem zweiten Übertragungsweg an einen übernächsten dritten Teilnehmer übertragen wird, wobei der zweite Übertragungsweg und damit der zweite Rahmen den zweiten Teilnehmer überspringt und abhängig von wenigstens einem Kriterium, also Information, Länge oder Struktur eine Bewertung vorgenommen wird. Der zweite Rahmen kann identisch mit dem ersten sein, aber der Übertragungsweg ist ein anderer.)

Es wird also eine ringförmige Struktur vorgeschlagen, wobei für jeden Teilnehmer oder Netzwerkknoten mindestens zwei Eingänge, also vom Vorgänger und dessen Vorgänger, vorgesehen sind. Der Teilnehmer, der über diese zwei Eingänge in zwei Rahmen die Information übertragen bekommt, erkennt dann automatisch (z.B. durch den Vergleich der Information, insbesondere der Dateninhalte, das Prüfen der Struktur und/oder der Länge der Rahmen), ob die übertragene Information, insbesondere die Daten von wenigstens einem Vorgänger gültig sind bzw. ob auf Fehler entschieden werden muss. Abhängig von dieser Bewertung, insbesondere bei Erkennung eines Fehlers, können dann spezielle Maßnahmen wie beispielsweise die Umschaltung auf einen anderen Eingang oder die Blockierung des fehlerhaften Eingangs eingeleitet werden. Dabei kann die Anzahl der zu betrachtenden Eingänge vorgebbar, insbesondere programmierbar sein. Durch das erfindungsgemäße Verfahren und die erfindungsgemäße Vorrichtung, basierend auf einer ringförmigen Datenübertragung, reduziert sich die Anzahl der Verbindungen bzw. der Übertragungswege beträchtlich.

Zweckmäßiger Weise enthalten die Rahmen jeweils erste Informationsbereiche entsprechend der Anzahl der Teilnehmer im Netzwerk, wobei jedem Teilnehmer ein erster Informationsbereich eindeutig zugeordnet ist. D. h. jedem Teilnehmer wird innerhalb eines Rahmens, also eines Informationsframes, ein Bereich bzw. eine bestimmte Position zugeordnet, die in einer nachfolgenden Ausgestaltung einen Vergleich von Informationen zweier Rahmen erleichtert.

Zweckmäßiger Weise wird die Information wenigstens in Dateninformation und Gültigkeitsinformation unterschieden, wobei bei vorhandener Gültigkeitsinformation und fehlender oder nicht plausibler Dateninformation bei der Bewertung auf Fehler entschieden wird.

Weiterhin zweckmäßig ist, dass die Struktur und/oder die Länge eines Rahmens mit einer vorgegebenen Struktur und/oder Länge verglichen wird, wobei bei Abweichung auf Fehler entschieden wird.

Vorteilhafter Weise wird wenigstens eine der Angaben, also Information, Länge oder Struktur im ersten und im zweiten Rahmen wenigstens teilweise zur Bewertung miteinander verglichen und es wird auf Fehler entschieden, wenn diese in den verglichenen Teilen nicht übereinstimmen. Dabei ist es zweckmäßig, solche Teile zu vergleichen, die über alle betrachteten Übertragungswege auch übertragen wurden.

In einer vorteilhaften Ausgestaltung wird die Information in einer Bifrequenzcodierung übertragen, so dass unabhängig vom Inhalt der Information andauernd Signale auf dem Netzwerk übertragen werden und bei Fehlen der Signale oder bei Nichtübereinstimmung der Signale mit dem Code auf wenigstens einem Übertragungsweg auf Fehler entschieden wird. Anstelle der Bifrequenzcodierung kann auch jeder andere Code benutzt werden, der unanhängig vom Dateninhalt zu ständig wechselnden Signalen führt. So sind beispielsweise auch Blockcodes einsetzbar, die eine gewisse Anzahl von Datenbits i durch eine höhere Anzahl von Codebits j in einer solchen Weise ersetzt, dass in jedem Codewort beide Signalpegel vorhanden sind. Mit i=5 und j=6 erhählt man den bekannten 5B/6B Code. Ebenso ist ein 8B/10B Code anwendbar. Gegenüber dem Bifrequenzcode haben diese Codes den Vorteil, dass eine geringere Coderedundanz vorliegt und durch geeignete Wahl der Codewörter eine geringere Netzwerkaktivitaet erreicht werden kann. Durch die Wahl einer solchen Codierung (Bi-Frequenz-Code oder geeigneter Block Code) wird erreicht, dass jeder Netzwerkteilnehmer den Takt aus den Daten zurückgewinnen kann und die Verarbeitung synchron mit diesem Takt erfolgen kann. Eine Abtastung der Daten mit höherer Taktfrequenz ist damit nicht erforderlich.

Zweckmäßiger Weise wird nun bei Entscheidung auf Fehler wenigstens eine geeignete Maßnahme eingeleitet. Diese kann beispielsweise sein, einen Informationseingang eines Teilnehmers von einem Übertragungsweg, der als fehlerhaft erkannt wurde, abzuschalten oder zu blockieren, so dass die Information und der Rahmen nur über den weiteren Übertragungsweg übertragen werden. Gleichermaßen kann die über den als fehlerhaft erkannten Übertragungsweg eingehende Information bzw. der entsprechende Rahmen auch im Teilnehmer selbst als fehlerhaft verworfen werden.

In einer vorteilhaften Ausgestaltung wird zur Erkennung eines Fehlers, also zur Bewertung, ein Funktionstest durch wenigstens einen Teilnehmer durchgeführt, wobei wenigstens ein Teilnehmer als fehlerhaft vorgegeben wird, indem wenigstens eine der Angaben, also Information, Struktur oder Länge wenigstens teilweise verändert und durch den als fehlerhaft vorgegebenen Teilnehmer übertragen wird. Auf den erwarteten Fehler kann dann überprüft werden, ob die adäquate Maßnahme eingeleitet wird.

In einer speziellen Ausgestaltung ist ein Teilnehmer vorgesehen, der eine Masterfunktion ausübt, also die Übertragung der Information im Netzwerk steuert, indem dieser wenigstens einen Rahmen erzeugt, in der Regel durch Vorgabe von Informationsbereichen bzw. Zeitschlitzen, basierend auf dem eigenen Takt. Wird nun ein Fehler im Master entschieden bzw. erkannt, so kann vorteilhafter Weise der nächste auf den Master folgende Teilnehmer die Masterfunktion übernehmen, sofern dieser entweder einen eigenen Basistakt besitzt (z.B. durch einen angeschlossenen Quarz-Oszillator) oder einen solchen von einer an der Ausgangsschnittstelle angeschlossenen Applikation übernehmen kann. Bei Ausfall des Masters liegt entweder keine oder nur eine verringerte Netzwerkaktivität vor, solange kein neuer Master existiert.

Zweckmäßiger Weise enthält jeder Rahmen eine Kennungsinformation, die den Rahmen eindeutig kennzeichnet, wobei redundante Rahmen, die über unterschiedliche Übertragungswege übertragen werden, die gleiche Kennung besitzen.

Ebenso enthält die Information wenigstens Steuerinformation und Dateninformation, wobei die Steuerinformation zur Steuerung der Übertragung der Rahmen dient. Dadurch, dass Steuerinformationen mitübertragen werden können, kann vorteilhafter Weise eine zusätzliche Resetleitung oder zusätzliche Steuerleitungen verzichtet werden ebenso wie auf die Synchronisation der internen Zähler, die als Zeitbasen der Teilnehmer dienen. Daneben ist es zweckmäßig, dass die Information wenigstens Statusinformation enthält, welche den Netzwerkstatus beschreibt, wobei die Statusinformation entweder dem aktuellen Netzwerkstatus entspricht oder bezogen auf den entsprechenden Rahmen ist. Diese Statusinformation kann dann zweckmäßiger Weise wenigstens einer Verbindungsinformation entsprechen oder diese enthalten, welche den Status eines konkreten vorgebbaren Übertragungsweges, insbesondere des Übertragungsweges, über den der entsprechende Rahmen übertragen wurde, darstellt oder enthält.

In einer weiteren vorteilhaften Ausgestaltung wird bei wenigstens vier Teilnehmern ein dritter Rahmen mit gleicher Länge und Struktur wie die beiden ersten Rahmen übertragen, wobei der vierte Teilnehmer den ersten Rahmen vom dritten Teilnehmer, den zweiten Rahmen vom zweiten Teilnehmer und den dritten Teilnehmer vom ersten Teilnehmer übertragen bekommt und beim zweiten Rahmen der dritte Teilnehmer und beim dritten Rahmen der zweite und dritte Teilnehmer übersprungen werden. Diese spezielle Ausgestaltung kann nun dahingehend verallgemeinert werden, dass bei N Teilnehmern K Übertragungswege und damit K Eingänge eines Teilnehmers vorgesehen werden und somit auch noch mit einer bestimmten Anzahl von Fehlern sicher bewertet und entschieden sowie verlässlich reagiert werden kann.

Weitere Vorteile und vorteilhafte Ausgestaltungen ergeben sich aus der Beschreibung sowie den Merkmalen der Ansprüche.

### Zeichnung

Die Erfindung wird im Weiteren anhand der in der Zeichnung dargestellten Figuren näher erläutert.

Dabei zeigt
Figur 1 ein erfindungsgemäßes Netzwerk mit vier Teilnehmern.
In Figur 2 ist beispielhaft ein Teilnehmer mit drei Übertragungswegen detailliert dargestellt.
Figur 3 zeigt beispielhaft einen Rahmen zur Übertragung von Information sowie darin enthaltene Informationsbereiche.

### Beschreibung der Ausführungsbeispiele

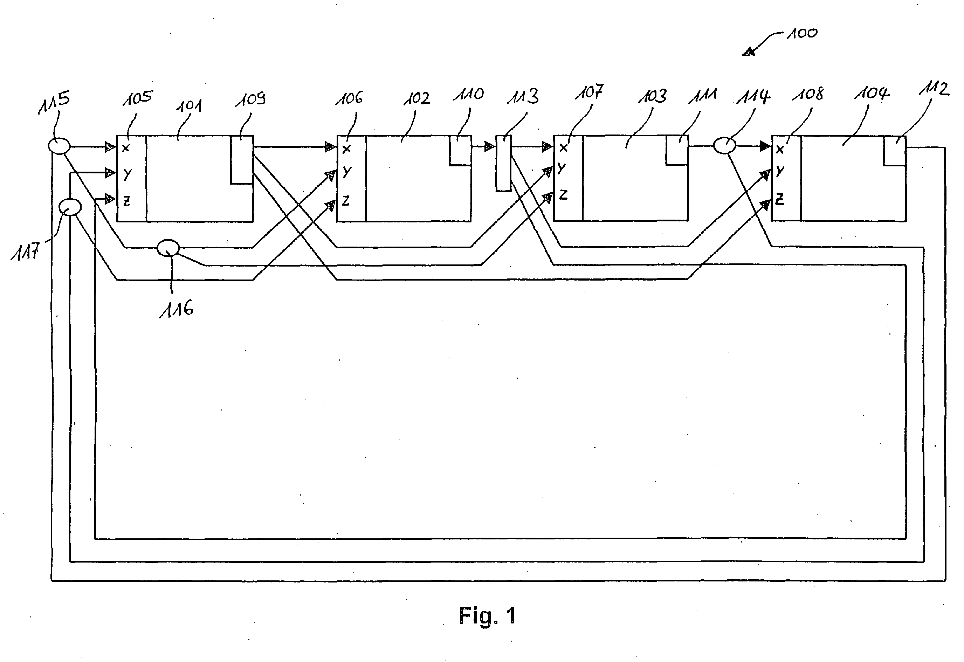

Figur 1 zeigt ein erfindungsgemäßes Netzwerk mit Teilnehmern 101 bis 104. Darin sind Eingangsschnittstellen 105 bis 108 mit jeweils drei Eingängen X, Y und Z gezeigt. Ebenso sind Ausgangsschnittstellen 109 bis 112 in jedem Teilnehmer dargestellt. Dabei entspricht jedem Eingang X, Y, Z der Eingangsschnittstellen 105 bis 108 ein Übertragungsweg, welcher deshalb nicht separat bezeichnet wurde, sondern die gleiche Bezeichnung wie die jeweilige Eingangsschnittstelle, also beispielsweise 105X oder 107Z trägt.

Die Übertragung der Information erfolgt über die Ausgangsschnittstellen 109 bis 112, wobei dabei verschiedene Konfigurationsmöglichkeiten gegeben sind. Die Schnittstelle 109 ist so konzipiert, dass sie drei Ausgangsschnittstellen eben im Rahmen der Übertragungsstrecken 106X, 107Y und 108Z bietet, d. h. dass eine Teilung bzw. eine Definition dreier Übertragungsrahmen bereits im Teilnehmer, insbesondere in Schnittstelle 109 geschieht. Dabei kann auch, beispielsweise bei längeren Übertragungsstrecken, eine Signal- oder Pegelanpassung bezüglich der Rahmen, die über diese längeren Übertragungswege übertragen werden, durchgeführt werden. Schnittstelle 110 in Verbindung mit Abzweigelement 113 zeigt eine weitere Möglichkeit der Konfiguration. Dabei wird die Information im Rahmen von 110 zu 113 übertragen und eine Aufteilung bzw. Doppelung oder Verdreifachung des Rahmens erfolgt im Element 113 bezüglich der Übertragungswege 107X, 108Y und 105 Z. D. h. es kann ein einfacher Teilnehmer mit einer einfachen Ausgangsschnittstelle 110 eingesetzt werden und eine Signalanpassung oder Verstärkung, soweit erforderlich, kann über das Abzweigelement 113 erfolgen. In einem einfachen bevorzugten Fall ist dieses Abzweigelement aber lediglich als einfache Leitungsankopplung 114 ausgebildet. D. h. die Information wird in den Rahmen aus Schnittstelle 11 übertragen und es erfolgt lediglich eine Abzweigung des Signals über Element 114 auf Übertragungsweg 105Y und nochmals über Element 117 auf Übertragungsweg 106Z. D. h. im einfachsten Fall werden die Signale einfach auf die drei Übertragungswege aufgeteilt. Es wird somit ein erster Rahmen über die Eingänge X, ein zweiter Rahmen über die Eingänge Y und ein dritter Rahmen über die Eingänge Z übertragen.

Zur vereinfachten Darstellung sind generell auch mit 115 und 116 einfache Abzweigelemente dargestellt, wobei die dargestellten Möglichkeiten der Ausgangsschnittstellen jeweils durchgängig oder beliebig kombiniert eingesetzt werden können.

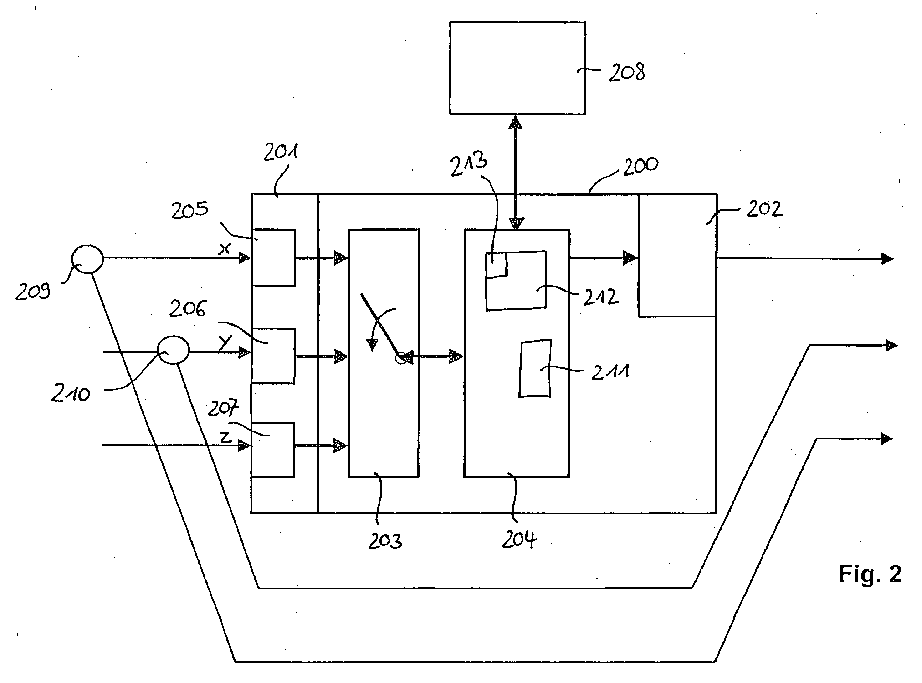

Figur 2 zeigt nun einen einzelnen Teilnehmer 200 eines solchen Netzwerkes mit drei Übertragungswegen 201X, 201Y und 200Z, wobei mit 201 wiederum die Eingangsschnittstelle dargestellt ist. Mit 209 und 210 sind wieder Abzweigelemente, wie vorher beschrieben, dargestellt. Als Ausgangsschnittstelle ist ein Element 202 dargestellt. Die Übertragungswege münden in drei Eingängen X, Y, Z, denen jeweils ein Empfänger 205, 206 und 207 zugeordnet ist. Die empfangene Information bzw. die empfangenen Rahmen werden dann einer Auswahleinrichtung 203 zugeführt, welche zum Einen selektiv die Rahmen bzw. die entsprechende Information an den Datenspeicher mit Datenauswertung bzw. Bewertung 204 weiterleitet. Zur einfacheren Darstellung ist als Speicher und Auswertevorrichtung nur ein Block 204 dargestellt. Dies ist aber ebenso getrennt möglich. Die Auswertevorrichtung 204 leitet zum Einen die entsprechende Information bzw. einen Rahmen an die Ausgangsschnittstelle 202 weiter, und zum Anderen ein Ergebnis der Bewertung zu einem Element 208, welches gleichermaßen ein separates Bauteil oder eine Software oder ein Programmteil, eben eine Anwendung, darstellt. Mit 212 ist eine Prozessoreinheit oder Mikrocomputereinheit zur Verarbeitung dargestellt, mit 211 ein Speicherelement. Optional enthalten ist ein Element 213, eine interne Zeitbasis, aus welcher ein Takt generiert werden kann. Hat ein Teilnehmer eine Masterfunktion zugewiesen, also steuert dieser Teilnehmer die Übertragung im Netzwerk, so können ausgehend von diesem internen Takt ein Netzwerktakt vorgegeben werden, so dass ein Rahmen zur Übertragung mit verschiedenen Informationsbereichen aus diesem Zeittakt abgeleitet werden kann und alle anderen Netzwerkteilnehmer ihren Takt aus dem Datensignal zurückgewinnen können.

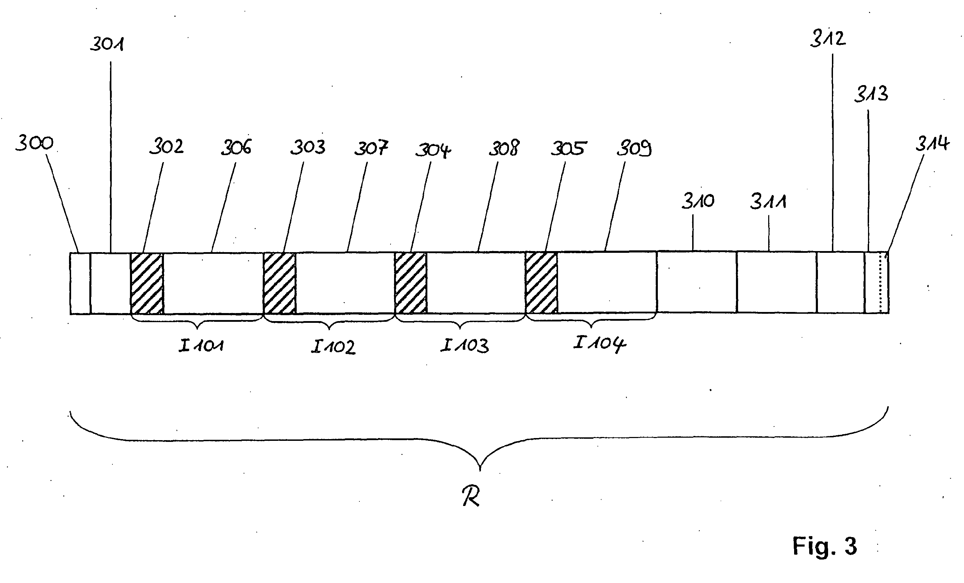

Ein solcher Rahmen ist in Figur 3 dargestellt und mit R bezeichnet. Dabei sind verschiedene Informationsbereiche 300 bis 313 dargestellt. Diese Informationsbereiche enthalten beispielsweise binäre Information in Bit- oder Byteform. Dabei sind Informationsbereiche dargestellt, die einem Teilnehmer eineindeutig zuordenbar sind. Dies sind für die Teilnehmer 101 bis 104 die Bereiche I 101 bis I 104, wobei die Reihenfolge willkürlich und beispielhaft zu sehen ist. In dem dargestellten Beispielrahmen R sind nun Informationsbereiche 302 bis 305 enthalten, in welchen Gültigkeitsinformation, insbesondere Teilnehmerstatusinformation, abgelegt werden kann. Diese Gültigkeitsinformationsbereiche zeigen beispielsweise die Art und Gültigkeit der Information an, insbesondere der Daten in den nachfolgenden Bereichen 306 bis 309, wobei jeweils ein Gültigkeitsbereich und ein Datenbereich einem Teilnehmer fest zugeordnet ist. Weiterhin enthalten im Rahmen ist ein Kennungsbereich 300, in welchem Kennungsinformation bezüglich des Rahmens abgelegt ist, d. h. ein Rahmen ist durch die Kennung bzw. Kennungsinformation 300 gekennzeichnet, wobei in einem speziellen Ausführungsbeispiel gleiche Rahmen, die über unterschiedliche Übertragungswege übertragen werden, gleiche Kennungen enthalten; unter Umständen unterschieden, dass diese zwar einander zugeordnet werden können, aber gleichzeitig dem Übertragungsweg zuordenbar sind. Bereich 201 enthält beispielsweise Statusinformationen bezüglich des Netzwerkes. Block 310 enthält beispielsweise einen reservierten Bereich für Zusatzinformationen. Im Informationsbereich 311 ist beispielsweise Information abgelegt bezüglich eines Konsistenzchecks des Rahmens, also beispieslweise Kontrollbytes bezüglich eines Cyclic-Redundancy-Checks oder auch zur Takt- und Längenprüfung des Frames sowie der Rahmenpositionsüberwachung. Im Block 312 sind beispielsweise Controllinformationen abgelegt, also Steuerinformationen, die es ermöglichen, insbesondere dem Master die Übertragung der Information zu steuern. Des Weiteren ist im Block 313 beispielsweise die vorher auch bei Block 311 erwähnte Information abgelegt zur Längen- und Strukturprüfung des Rahmens R, wobei mit Block 314 als Beispiel ein Paritätsbit als weitere Überprüfungs- und Bewertungsmaßnahme hinzugefügt ist.

Die soeben dargestellte Rahmenstruktur ist nur beispielhaft zu sehen. Erfindungsgemäß ist auch eine andere Rahmenstruktur je nach erfindungsgemäßer Anwendung möglich und einsetzbar. Gleiches gilt für die im Rahmen übertragene Information.

Im Weiteren wird eine erfindungsgemäße Funktionsweise bezüglich einer solchen Bewertungs- oder Votingstruktur für verteilte und hier mehrfach redundante Systeme dargestellt. Dazu werden die Informationen, also die Information, insbesondere die Daten oder Dateninformationen seriell im Netzwerk in einem Rahmen oder Frame mit vorgegebener, insbesondere fester Anzahl von binärer Information, insbesondere Bytes übertragen. Jeder Teilnehmer des Netzwerk erhält insbesondere entsprechend seiner Position eineindeutig einen Informationsbereich, insbesondere zusammengesetzt aus Gültigkeitsbereich und Datenbereich zugeordnet. Ein Teilnehmer, insbesondere der Teilnehmer 101, fungiert als Master, übt also die Masterfunktion aus, steuert also den gesamten Informationstransfer. Dazu wird vom internen Taktgeber des Masters der Systemtakt abgeleitet und dieser Master erzeugt eben ausgehend von seinem internen Takt den Systemtakt und damit den Rahmen zur Informationsübertragung.

Die Übertragung der Information ist parallel möglich, weil jedem Teilnehmer in dieser Ausgestaltung eine feste Position im Rahmen für die Übermittlung seiner Dateninformation bzw. Status- oder Gültigkeitsinformation 302 bis 305 zugeordnet ist.

In Figur 1 sind jeweils drei Eingänge dargestellt. Diese Zahl kann abhängig von der Gesamtzahl der Teilnehmer variieren, wobei aus Redundanzgründen mindestens zwei Eingänge und damit zwei getrennte Übertragungswege vorzusehen sind. So überträgt beispielsweise Teilnehmer 101 einen ersten Rahmen aus Schnittstelle 109 über Übertragungsweg 106X zum entsprechenden Eingang von Teilnehmer 102. Ein zweiter Rahmen mit entsprechender Information wird nun über Übertragungsweg 107Y zum Teilnehmer 103 übertragen, d. h. der Rahmen und die darin enthaltene Information überspringt den Teilnehmer 102. Der erste Rahmen über Übertragungsweg 106X wird vom Teilnehmer 102 empfangen und wird unter Umständen unter Hinzufügung von Daten an Teilnehmer 103 übertragen. Somit enthält Teilnehmer 103 einen ersten Rahmen mit entsprechender Information über Eingang 107X sowie einen zweiten Rahmen mit weitestgehend gleicher Information über Eingang 107Y. Der einzige Unterschied beider Rahmen liegt darin, dass Teilnehmer 102 unter Umständen ihn betreffende Daten in dem ihn betreffenden Informationsbereich verändert oder hinzugefügt hat.

Die Bewertung selbst, also das Voting kann nun in Teilnehmer 103 durch den Controller, (vergleichbar 212) im Datenauswertemodul (vergleichbar 204) vorgenommen werden. Dabei können nun unterschiedliche Fehler erkannt werden. Die eine Gruppe von Fehlern kann durch Prüfung eines Rahmens aufgedeckt werden, indem Konsistenzprüfungen innerhalb des Rahmens und darin zusammenhängenden oder voneinander abhängenden Daten bzw. Informationen durchgeführt werden. Eine zweite Gruppe von Fehlern kann beispielsweise dadurch erkannt werden, dass der erste und der zweite Rahmen, also wie im Beispiel über 107X und 107Y eingegangen bzw. die darin enthaltenen Informationen wenigstens teilweise miteinander verglichen werden und auf Übereinstimmung geprüft werden.

Die dabei zu prüfenden Einzelheiten betreffen zum Einen die transportierte Information und/oder die Länge des Rahmens bzw. der enthaltenen Information und/oder die Struktur des Rahmens.

Bezüglich der Information kann durch Vergleich sicher jeder Fehler erkannt werden mit Ausnahme im Informationsbereich 1102, da der erste Rahmen in diesem Bereich veränderte Daten aufweisen kann, da der Teilnehmer 102 in diesen Bereich einschreiten darf. Alle übrigen Informationsbereiche, also alle die, in welchen Teilnehmer 102 keine Veränderungen vornehmen darf, müssen bezüglich des ersten Rahmens über 107X und des zweiten Rahmens über 107Y gleich sein. Eine Abweichung hierbei zeigt einen Fehler an. Ebenso müssen die Rahmen R selbst als erster und zweiter Rahmen bezüglich ihrer Länge sowie ihrer Struktur, also der Informationsbereiche 300 bis 313 gleich aufgebaut sein,und Abweichungen hierbei bei einem Vergleich beider Rahmen führen ebenfalls dazu, dass auf Fehler entschieden wird. Darin sind auch Taktfehler enthalten, da diese sich direkt entweder auf die Struktur und/oder auf die Länge des Rahmens auswirken. Somit ist ein Vergleich zwischen den redundanten Rahmen, insbesondere der Information, die darin enthalten ist, speziell der Daten möglich, die über unterschiedliche Übertragungswege unter Umständen zeitversetzt empfangen werden. Dadurch, dass die Daten weitestgehend redundant sofort zur Verfügung stehen, erhöht sich die Sicherheit, da ein weiterer Zeitverlust durch Umschalten im Fehlerfall nicht erfolgt.

Durch diesen möglichen Zeitversatz zweier redundanter Rahmen wird in einer erfindungsgemäßen Ausgestaltung, im Rahmen eine Kennungsinformation hinterlegt, eine zuordenbar gleiche Kennungsinformation besitzen. Das bedeutet beispielsweise in der Preambel 300, also im Kennungsbereich, der beispielsweise 1 Byte umfasst, dienen die ersten 6 Bit dazu, die redundanten Rahmen einander zuzuordnen, dass also der erste und zweite Rahmen einander zugeordnet werden können, diese ersten 6 Bit also gleich sind, um die beiden redundanten Rahmen von anderen Rahmen zu unterscheiden. Die weiteren 2 Bit dienen beispielsweise dazu, den ersten Rahmen über Übertragungsweg 106X bzw. 107X von dem zweiten Rahmen über Übertragungsweg 107Y zu unterscheiden. So können die Rahmen zwar einander eindeutig zugeordnet werden, wobei dennoch die Übertragungswege feststellbar sind, wodurch ein Blockieren im Fehlerfall des korrekten Übertragungsweges bzw. des entsprechenden Eingangs möglich ist. Durch diese Kennung kann somit die Synchronisation auf ein zu bewertendes Ereignis ermöglicht werden, wobei außerdem durch die Position des Teilnehmers im Netzwerk bei eineindeutiger Zuordnung ein eindeutiger Zeitbezug insbesondere zum Master hergestellt werden kann. Ebenso kann auf Fehler entschieden werden, indem im Rahmen selbst auf Konsistenz geprüft wird. Dies kann einmal dadurch geschehen, dass übertragene Information und/oder Struktur des Rahmens und/oder Länge des Rahmens bzw. Zeittakt im Rahmen im bewertenden Teilnehmer bereits vorgegeben, also bekannt sind und die genannten Aspekte, also Information und/oder Struktur und/oder Länge des Rahmens mit den bereits vorgegebenen Werten diesbezüglich verglichen werden und bei Abgleichung auf Fehler entschieden wird.
Des Weiteren sind Bewertungen aufgrund von einander abhängender Information und/oder Struktur und/oder Länge im Rahmen selbst möglich, da beispielsweise Strukturund/oder Längeninformation, wie vorher erwähnt in Block 310 oder 313, im Rahmen enthalten ist. D. h. entspricht die tatsächliche Struktur oder Teile daraus nicht oder wenigstens teilweise nicht der Strukturinformation, wie sie im Rahmen enthalten ist, kann auf Fehler entschieden werden. Gleiches gilt für Information selbst, wie beispielsweise Prüfinformation, beispielsweise die Controlbytes eines Cyclic-Redundancy-Checks bezüglich Informationsteilen des Rahmens. Gleiches gilt für eine Paritätsprüfung, beispielsweise mittels eines Paritätsbits, wie im Block 314 dargestellt. Auch eine Taktabweichung im Rahmen oder eine Rahmenpositionsabweichung kann durch entsprechende Überwachung erkannt werden. Auch knoteninterne Fehler, beispielsweise dass die Dateninformation im Block 307 nicht mit der Art- und Gültigkeitsinformation in Block 303 korrespondiert, führt zu einem Entscheid auf Fehler. Ist beispielsweise durch eine Gültigkeitsinformation im Block 303 angezeigt, dass im Block 307 Daten enthalten ist, diese Daten aber fehlen, wird auf Fehler entschieden. Gleiches gilt dafür, falls im Block 303 die Art der Daten codiert vorliegt und diese vorliegende Art der Daten nicht mit den tatsächlichen Daten oder der tatsächlichen Dateninformation im Block 307 übereinstimmt, wird ebenfalls auf Fehler entschieden. Wegen der dann fehlenden Daten und des Gültigkeitseintrags wird der nicht bewertbare bzw. fehlerhafte Knoten dann von allen anderen erkannt. Eine weitere Möglichkeit der Bewertung bzw. Fehlerentscheidung ist es, die Daten bzw. die Information in einer Bifrequenzcodierung zu übertragen. Dabei bedeutet Bifrequenzcodierung oder Biphasencodierung, dass jedem Datenbit ein Zeitintervall zugeordnet ist, welches mit einem Übergang, insbesondere zwischen zwei Pegeln beginnt und mit einem Übergang zwischen diesen beiden Pegeln endet. Gibt es innerhalb dieses Zeitintervalls einen weiteren Übergang, so ist das entsprechende Datenbit im Rahmen der Codierung als 1, andernfalls als 0 zu interpretieren. Damit kann gleichermaßen Taktinformation und die Information selbst, also insbesondere Dateninformation, miteinander codiert werden. Wird die Information in einer solchen Form codiert übertragen, so ist unabhängig von der Information selbst, also vom Informationsinhalt, ständig oder andauernd Aktivität auf den Übertragungswegen bzw. auf dem Netzwerk.Wird dann auf wenigstens einem Übertragungsweg das Fehlen dieser Bifrequenzcodierung erkannt, so kann in diesem Fall ebenfalls auf Fehler entschieden werden.

Die genannten Prüfmaßnahmen im Rahmen der Bewertung zur Entscheidung auf Fehler können einzeln oder in beliebiger Kombination eingesetzt werden, wodurch auch zusätzlich Redundanz erzielbar ist. Durch diese Bewertungsmechanismen entsteht weiterhin die Möglichkeit, defekte Übertragungswege und Teilnehmer sehr schnell zu erkennen, insbesondere durch die Bifrequenzcodierung und automatisch entsprechende Maßnahmen zur Beherrschung des Fehlers einzuleiten. Da die Votierung oder Bewertung mittels einer N-aus-K-Bewertung vorgenommen wird, also beispielsweise drei Teilnehemr gleich N und zwei Eingänge oder Übertragungswege je Teilnehmer gleich K kann je nach Wahl von N und K mit einer bestimmten Anzahl von Fehlern verlässlich reagiert werden. Im Beispiel nach Figur 1 entsteht somit eine Voterstruktur für ein K-aus-4-Voting, insbesondere 3-aus-4-Voting bei Zulassung von beispielsweise zwei Netzwerkfehlern.

Die zwei Netzwerkfehler ergeben sich dadurch, da maximal drei Eingänge und damit drei Übertragungswege zur Verfügung stehen und somit bei zwei auftretenden Netzwerkfehlern entweder auf den Übertragungswegen oder in Teilnehmern dennoch ein korrekter Rahmen mit entsprechender Information zur Verfügung steht. Da durch die Übertragungswege Teilnehmer übersprungen werden und unter Umständen die Daten dieser Teilnehmer nicht aktuell bzw. nicht korrekt enthalten sind, ist es erfindungsgemäß denkbar, eine Korrektur vorzunehmen und den entsprechenden Rahmen an die entsprechenden Teilnehmer zurückzusenden zur entsprechenden Korrektur der Information. Dies kann durch Statusinformation im Rahmen vereinfacht werden, so dass im Falle einer Korrektur die Statusinformation Korrektur oder Correction erkannt wird. Weitere Stati sind beispielsweise Initial für Initialisierung, Enter für Dateneingabe, Distribute für Datenverteilung, Master lost für schweren Masterfehler und Verlust der Masterfunktion dieses Teilnehmers, ready oder fertig, empty oder leer, fault free, also fehlerlose Übertragung, error oder Fehler, data equal, also gleiche Daten oder data not equal, also ungleiche Daten, wenn dies schon von vornherein bekannt ist sowie test im Falle eines Testbetriebes. So können über Statusinformationen nicht nur der Zustand des Netzwerkes selber von jedem beliebigen Knoten erkannt werden, sondern auch der aktuelle Status jedes Teilnehmers, wenn zwischen Netzwerkstatus und Teilnehmerstatus unterschieden wird. So können Stati für Übertragungswege, für Teilnehmer oder das gesamte Netzwerk eingesetzt werden, was gleichzeitig die Bewertungsfähigkeit bzw. die Bewertungssicherheit und Genauigkeit erhöht, da beispielsweise bei einer Angabe "data not equal" bei einem Gleichheitsvergleich zweier Informationsteile dies berücksichtigt werden muss.

Neben der Statusinformation ist es auch möglich, Steuerinformation zu übertragen, beispielsweise zur Steuerung der Übertragung durch einen Master.

So ist beispielsweise der Fehler "Master lost", eben der Ausfall des Masters, sehr gravierend. Dieser Ausfall des Masters kann beispielsweise über die Statusinformation, insbesondere in Verbindung mit der Dateninformation, erkannt werden. Ebenso sind einzelne oder alle Fehlermechanismen, wie oben beschrieben, anwendbar. Sollte nun der Master ausfallen, so kann als Fehlerreaktion ein anderer Teilnehmer, insbesondere der nächstfolgende Teilnehmer, die Masterfunktion übernehmen. Dies setzt voraus, dass dieser nachfolgende Master entweder über einen unabhängigen Takt verfügt, beispielsweise aus der Anwendung, oder über einen eigenen Taktgeber, um im Falle der notwendigen Übernahme der Masterfunktion die Daten treiben zu können, da, wie beschrieben, der Master den Takt insbesondere in Rahmen vorgibt. Eine weitere Möglichkeit der Taktgewinnung besteht durch die Nutzung der Taktbasis von Applikationsschaltungen, die ggf. an der Ausgangsschnittstelle angeschlossen sind. Durch Frequenzteilung oder Frequenzvervielfachung (z.B. mittels PLL) ist die Frequenz an die erforderliche Netzwerkfrequenz anpassbar. Eine PLL ist ohnehin für jeden nicht-Master-Netzwerkteilnehmer (Slave) erforderlich, sofern der Takt nicht über eine separate Leitung zusätzlich übertragen wird, sondern aus den Daten zurückgewonnen werden muss.Für den Fall, dass der Takt nicht zurückgewonnen werden kann, ist auch eine parallele Taktübertragung vom Master zu allen Slaves oder allen weiteren Teilnehmern möglich. Diese Taktübertragung muss ähnlich wie die Datenübertragung, also die Informationsübertragung, über mehrere parallele Leitungen vorgenommen werden mit automatischem Ersatz ausgefallener Taktleitungen.

Durch die vorgenannten Möglichkeiten kann man sich durch unterschiedliche Programmierung einfach jeder Konfiguration und jedem Bewertungsmaßstab anpassen.

So kann auch ein Test der Übertragungswege bzw. der Teilnehmer dadurch erfolgen, dass diese als fehlerhaft bestimmt werden, also Fehler explizit eingebaut werden. Ein solcher Test kann auch periodisch und zyklisch erfolgen, indem alle Teilnehmer nacheinander oder nach bestimmten Vorgabemustern geprüft werden. Bei diesem Test werden also die Informationen eines Rahmens abgespeichert, beispielsweise in einem Speichermittel, vergleichbar 211, dann ausgewertet und gegebenenfalls modifiziert, im Rahmen des Tests eben fehlerhaft modifiziert wieder ausgesendet. Das hat zur Folge, dass auch bei dem Test der nächste Knoten bzw. Teilnehmer die Information beispielsweise um zwei Rahmen verzögert erhält. Auch hier kann die Synchronisation auf ein zu bewertendes Ereignis, eben hier das Testereignis insbesondere durch die Kennung zu Beginn eines Rahmens erreicht werden, wobei außerdem durch die Teilnehmerposition ein eindeutiger Zeitbezug zum Master im Rahmen des Tests ebenfalls hergestellt werden kann. Die Steuerung dieses Tests kann beispielsweise durch den Master erfolgen, beispielsweise durch Controllinformation oder Controllbytes im Rahmen, insbesondere durch entsprechende Statusinformation Test. Im Rahmen dieses Tests wird dann die adäquate Reaktion auf den Fehler, also die entsprechende eingeleitete Maßnahme, im Netzwerk überprüft. Diese Maßnahme kann in Abhängigkeit von der Art des Fehlers, erkennbar durch oben genannte unterschiedliche Bewertungskriterien, vorgegeben sein. Zum Einen kann, wie oben erwähnt, eine Korrektur vorgenommen werden, zum Anderen können fehlerhafte Teilnehmer oder Übertragungswege entweder dauerhaft ausgeschlossen werden durch Blockierung, Abschaltung oder Datenverwerfung oder auch versuchsweise wieder eingebunden werden, was ebenfalls durch übertragene Statusinformation darstellbar ist. Die Blockierung oder Abschaltung einzelner Übertragungswege oder Teilnehmer kann beispielsweise durch die Auswahleinrichtung 203 erfolgen, wenn diese beispielsweise aus der Auswerteeinrichtung 204 die Vorgabe bekommt, bestimmte Eingänge nicht mehr anzuwählen. Über die Auswahleinrichtung 203 ist auch die Anzahl der zu betrachtenden Eingänge vorgebbar bzw. programmierbar. So kann im Beispiel jede bis zur Maximalzahl von drei Eingängen gewünschte Eingangszahl benutzt werden, eben hier bei Verwendung eines Redundanzprinzipes zwei oder drei Eingänge.

Verallgemeinert'ergibt sich somit eine Voterstruktur bzw. ein Bewertungsverfahren mit N Teilnehmern und K Übertragungswegen mit K<N, welche trotz hoher Konfigurierbarkeit mit vergleichsweise wenigen und kurzen Verbindungen, also Übertragungwegen auskommt. Dabei werden bei der Übertragung die Rahmen bzw. die Informationen, sofern diese über den Teilnehmer führen, in diesem abgespeichert und weiter übertragen, gegebenenfalls zwischenzeitlich in erlaubten Informationsbereichen verändert oder angepasst oder bei Testbedingungen absichtlich manipuliert. Eine dabei entstehende Verzögerung kann durch den Einsatz einer Kennung, wie beschrieben, durch die dadurch mögliche Zuordnung der Rahmen beherrscht werden. Die zeitlich zuerst kommenden Daten werden zu einem Vergleich zwischengespeichert bis die Vergleichsdaten verfügbar sind.

Damit ist eine Votingstruktur für verteilte mehrfachredundante sicherheitsrelevante Systeme gegeben, die eine einstellbare Redundanz sowie hohe Flexibilität und Konfigurierbarkeit aufweist.

## Patentansprüche

1. Verfahren zur Übertragung von Information in einem Netzwerk mit wenigstens drei Teilnehmern, wobei die Information in wenigstens einem ersten Rahmen vorgegebener Länge und Struktur übertragen wird und der erste Rahmen auf einem ersten Übertragungsweg ringförmig an den jeweils nächsten, zweiten Teilnehmer bei vorgegebener Übertragungsrichtung übertragen wird, **dadurch gekennzeichnet, dass** die Rahmen jeweils erste Informationsbereiche entsprechend der Anzahl der Teilnehmer enthalten, wobei jedem Teilnehmer ein erster Informationsbereich eindeutig zugeordnet ist, dass die Information zusätzlich in einem zweiten Rahmen gleicher Länge und Struktur wie der erste Rahmen übertragen wird, wobei der zweite Rahmen auf einem zweiten Übertragungsweg an einen übernächsten, dritten Teilnehmer übertragen wird, wobei der zweite Übertragungsweg und damit der zweite Rahmen den zweiten Teilnehmer überspringt und abhängig von wenigstens einem von Information, Länge oder Struktur eine Bewertung vorgenommen wird.

2. Verfahren nach Anspruch 1, **dadurch gekennzeichnet, dass** die Information wenigstens in Dateninformation und Gültigkeitsinformation unterschieden wird und bei vorhandene Gültigkeitsinformation und fehlender Dateninformation bei der Bewertung auf Fehler entschieden wird.

3. Verfahren nach Anspruch 1, **dadurch gekennzeichnet, dass** jeder Rahmen eine Kennungsinformation enthält, die den Rahmen eindeutig kennzeichnet, wobei der erste und der zweite Rahmen die gleiche Kennungsinformation besitzen.

4. Verfahren nach Anspruch 1, **dadurch gekennzeichnet, dass** die Struktur und/oder die Länge eines Rahmens mit einer vorgegebenen Struktur und/oder Länge verglichen wird und bei Abweichung auf Fehler entschieden wird.

5. Verfahren nach Anspruch 1, **dadurch gekennzeichnet, dass** wenigstens eines von Information, Länge oder Struktur in dem ersten und in dem zweiten Rahmen wenigstens teilweise zur Bewertung miteinander verglichen werden und auf Fehler entschieden wird, wenn diese nicht übereinstimmen.

6. Verfahren nach Anspruch 1, **dadurch gekennzeichnet, dass** die Information in einer Bi-Frequenz-Kodierung oder einer anderen geeigneten Codierung übertragen wird, so dass unabhängig vom Inhalt der Information andauernd Signale auf dem Netzwerk übertragen werden und bei Fehlen der Signale auf wenigstens einem Übertragungsweg auf Fehler entschieden wird.

7. Verfahren nach einem der Ansprüche 2,4,5,6, **dadurch gekennzeichnet, dass** bei Entscheidung auf Fehler auf einem Übertragungsweg ein Informationseingang eines Teilnehmers abgeschaltet oder blockiert wird, so dass die Information und der Rahmen nur über den weiteren Übertragungsweg übertragen werden.

8. Verfahren nach einem der Ansprüche 2,4,5,6, **dadurch gekennzeichnet, dass** als Funktionstest wenigstens ein Teilnehmer als fehlerhaft vorgegeben wird, indem wenigstens eines von Information, Struktur oder Länge wenigstens teilweise verändert und durch den als fehlerhaft vorgegebenen Teilnehmer übertragen wird.

9. Verfahren nach Anspruch 1, **dadurch gekennzeichnet, dass** ein Teilnehmer vorgesehen ist, der eine Masterfunktion ausübt, also die Übertragung der Information im Netzwerk steuert, indem dieser wenigstens einen Rahmen erzeugt und die Taktfrequenz der Information, insbesondere der Daten, vorgibt.

10. Verfahren nach einem der Ansprüche 2,4,5,6 und 9 **dadurch gekennzeichnet, dass** bei Entscheidung auf Fehler im Master der nächste auf den Master folgende Teilnehmer die Masterfunktion übernimmt.

11. Verfahren nach Anspruch 1, **dadurch gekennzeichnet, dass** die Information wenigstens Steuerinformation und Dateninformation enthält, wobei die Steuerinformation zur Steuerung der Übertragung der Rahmen dient.

12. Verfahren nach Anspruch 1, **dadurch gekennzeichnet, dass** die Information wenigstens Statusinformation enthält, welche den Netzwerkstatus beschreibt wobei die Statusinformation entweder dem aktuellen Netzwerkstatus entspricht oder bezogen auf den entsprechenden Rahmen ist.

13. Verfahren nach Anspruch 12, **dadurch gekennzeichnet, dass** die Statusinformation wenigstens einer Verbindungsinformation entspricht, welche den Status eines vorgebbaren Übertragungsweges darstellt.

14. Verfahren nach Anspruch 1, **dadurch gekennzeichnet, dass** bei wenigstens vier Teilnehmern ein dritter Rahmen mit gleicher Länge und Struktur wie die beiden ersten Rahmen übertragen wird, wobei der vierte Teilnehmer den ersten Rahmen vom dritten Teilnehmer, den zweiten Rahmen vom zweiten Teilnehmer und den dritten Rahmen vom ersten Teilnehmer übertragen bekommt und beim zweiten Rahmen der dritte Teilnehmer und beim dritten Rahmen der zweite und dritte Teilnehmer übersprungen wird.

15. Verfahren nach Anspruch 1 oder 14, **dadurch gekennzeichnet, dass** jeder Teilnehmer eine bestimmte erste Anzahl von Eingängen aufweist die der Anzahl an Übertragungswegen zu dem jeweiligen Teilnehmer entspricht, wobei aus der bestimmten ersten Anzahl von Eingängen eine beliebige zweite Anzahl von Eingängen abschaltbar oder blockierbar ist.

16. Vorrichtung zur Übertragung von Information in einem Netzwerk mit wenigstens drei Teilnehmern, wobei erste Mittel enthalten sind, welche die Information in wenigstens einem ersten Rahmen vorgegebener Länge und Struktur übertragen und den ersten Rahmen auf einem ersten Übertragungsweg ringförmig an den jeweils nächsten, zweiten Teilnehmer bei vorgegebener Übertragungsrichtung übertragen, **dadurch gekennzeichnet, dass** die Rahmen jeweils erste Informationsbereiche entsprechend der Anzahl der Teilnehmer enthalten, wobei jedem Teilnehmer ein erster Informationsbereich eindeutig zugeordnet ist, dass zweite Mittel enthalten sind, welche die Information zusätzlich in einem zweiten Rahmen gleicher Länge und Struktur wie der erste Rahmen übertragen sowie den zweiten Rahmen auf einem zweiten Übertragungsweg an einen übernächsten, dritten Teilnehmer übertragen, wobei der zweite Übertragungsweg und damit der zweite Rahmen den zweiten Teilnehmer überspringt und dritte Mittel enthalten sind, welche abhängig von wenigstens einem von Information, Länge oder Struktur eine Bewertung vornehmen.

17. Vorrichtung nach Anspruch 16, **dadurch gekennzeichnet, dass** bei wenigstens vier Teilnehmern vierte Mittel enthalten sind, welche einen dritten Rahmen mit gleicher Länge und Struktur wie die beiden ersten Rahmen übertragen, wobei durch die ersten Mittel der vierte Teilnehmer den ersten Rahmen vom dritten Teilnehmer und durch die zweiten Mittel den zweiten Rahmen vom zweiten Teilnehmer und durch die vierten Mittel den dritten Rahmen vom ersten Teilnehmer übertragen bekommt und beim zweiten Rahmen der dritte Teilnehmer und beim dritten Rahmen der zweite und dritte Teilnehmer übersprungen wird.

18. Vorrichtung nach Anspruch 16 oder 17, **dadurch gekennzeichnet, dass** jeder Teilnehmer eine bestimmte erste Anzahl von Eingängen aufweist die der Anzahl an Übertragungswegen zu dem jeweiligen Teilnehmer entspricht, wobei fünfte Mittel enthalten sind durch welche aus der bestimmten ersten Anzahl von Eingängen eine beliebige zweite Anzahl von Eingängen abschaltbar oder blockierbar ist.

19. Netzwerk zur Übertragung von Information mit wenigstens drei Teilnehmern **dadurch gekennzeichnet, dass** Vorrichtungen nach wenigstens einem der Ansprüche 16, 17 oder 18 enthalten sind.

## Claims

1. Method for transmitting information in a network having at least three subscribers, wherein the information is transmitted in at least one first frame of prescribed length and structure and the first frame is transmitted on a first transmission path in a ring to the respective next, second subscriber for a prescribed transmission direction, **characterized in that** the frames respectively contain first information ranges according to the number of subscribers, with each subscriber having an explicitly associated first information range, **in that** the information is additionally transmitted in a second frame of the same length and structure as the first frame, with the second frame being transmitted on a second transmission path to a next but one, third subscriber, wherein the second transmission path and hence the second frame skip the second subscriber and an assessment is made on the basis of at least one feature from information, length or structure.

2. Method according to Claim 1, **characterized in that** the information is separated at least into data information and validity information and errors are inferred during the assessment if validity information is present and data information is absent.

3. Method according to Claim 1, **characterized in that** every frame contains a piece of identification information which explicitly identifies the frame, wherein the first and the second frame have the same piece of identification information.

4. Method according to Claim 1, **characterized in that** the structure and/or the length of a frame is/are compared with a prescribed structure and/or length and errors are inferred if there is a discrepancy.

5. Method according to Claim 1, **characterized in that** at least one feature from information, length or structure in the first and in the second frame are compared with one another at least partially for the assessment and errors are inferred if they do not match.

6. Method according to Claim 1, **characterized in that** the information is transmitted in bi-frequency encoding or other suitable encoding, so that signals are constantly transmitted on the network regardless of the content of the information and errors are inferred in the absence of the signals on at least one transmission path.

7. Method according to one of Claims 2, 4, 5, 6, **characterized in that** when errors are inferred on a transmission path, an information input for a subscriber is disconnected or blocked, so that the information and the frame are transmitted only via the further transmission path.

8. Method according to one of Claims 2, 4, 5, 6, **characterized in that** the function test involves at least one subscriber being prescribed as faulty by virtue of at least one feature from information, structure or length being at least partially altered and transmitted by the subscriber prescribed as faulty.

9. Method according to Claim 1, **characterized in that** a subscriber is provided which performs a master function, that is to say controls the transmission of the information in the network, by producing at least one frame and prescribing the clock frequency of the information, particularly the data.

10. Method according to one of Claims 2, 4, 5, 6 and 9, **characterized in that** when errors are inferred in the master, the next subscriber following the master undertakes the master function.

11. Method according to Claim 1, **characterized in that** the information contains at least control information and data information, the control information being used for controlling the transmission of the frames.

12. Method according to Claim 1, **characterized in that** the information contains at least status information which describes the network status, wherein the status information either corresponds to the current network status or relates to the relevant frame.

13. Method according to Claim 12, **characterized in that** the status information corresponds to at least one piece of connection information which shows the status of a prescribable transmission path.

14. Method according to Claim 1, **characterized in that** when there are at least four subscribers, a third frame having the same length and structure as the first two frames is transmitted, wherein the fourth subscriber receives the first frame transmitted from the third subscriber, the second frame transmitted from the second subscriber and the third frame transmitted from the first subscriber, and the second frame involves the third subscriber being skipped and the third frame involves the second and third subscribers being skipped.

15. Method according to Claim 1 or 14, **characterized in that** each subscriber has a particular first number of inputs which corresponds to the number of transmission paths to the respective subscriber, wherein an arbitrary second number of inputs from the particular first number of inputs can be disconnected or blocked.

16. Apparatus for transmitting information in a network having at least three subscribers, wherein first means are included which transmit the information in at least one first frame of prescribed length and structure and transmit the first frame on a first transmission path in a ring to the respective next, second subscriber for a prescribed transmission direction, **characterized in that** the frames respectively contain first information ranges according to the number of subscribers, each subscriber having an explicitly associated first information range, **in that** second means are included which transmit the information additionally in a second frame of the same length and structure as the first frame and transmit the second frame on a second transmission path to a next but one, third subscriber, wherein the second transmission path and hence the second frame skip the second subscriber and third means are included which make an assessment on the basis of at least one feature from information, length or structure.

17. Apparatus according to Claim 16, **characterized in that** when there are at least four subscribers, fourth means are included which transmit a third frame having the same length and structure as the first two frames, wherein the fourth subscriber receives the first frame transmitted from the third subscriber by virtue of the first means and receives the second frame transmitted from the second subscriber by virtue of the second means and receives the third frame transmitted from the first subscriber by virtue of the fourth means, and the second frame involves the third subscriber being skipped and the third frame involves the second and third subscribers being skipped.

18. Apparatus according to Claim 16 or 17, **characterized in that** each subscriber has a particular first number of inputs which corresponds to the number of transmission paths to the respective subscriber, wherein fifth means are included which can disconnect or block an arbitrary second number of inputs from the particular first number of inputs.

19. Network for transmitting information having at least three subscribers, **characterized in that** apparatuses according to at least one of Claims 16, 17 and 18 are included.

## Revendications

1. Procédé de transmission d'information dans un réseau comprenant au moins trois participants,
selon lequel les informations sont transmises dans au moins une première trame de longueur et de structure prédéfinies, et la première trame est transmise selon un premier chemin de transmission, en anneau, respectivement vers le second participant suivant, pour une direction de transmission donnée,
**caractérisé en ce que**
les trames contiennent chacune des premières zones d'informations correspondant au nombre des participants, et
à chaque participant, est associée de manière univoque, une première zone d'informations,
- l'information est en plus transmise dans une seconde trame de même longueur et de même structure que la première trame, et
- la seconde trame est transmise suivant un second chemin de transmission vers le second participant suivant, c'est-à-dire le troisième, et
- le second chemin de transmission et ainsi la seconde trame, contournent le second participant, et
- en fonction d'une information de longueur et de structure, on effectue une évaluation.

2. Procédé selon la revendication 1,
**caractérisé en ce que**
l'information se distingue au moins par une information de données et une information de validité et en cas d'information de validité, en l'absence d'information de données, l'évaluation décide qu'il y a une erreur.

3. Procédé selon la revendication 1,
**caractérisé en ce que**
chaque trame contient une information caractéristique qui caractérise de manière univoque la trame, et
la première et la seconde trame possèdent la même information caractéristique.

4. Procédé selon la revendication 1,
**caractérisé en ce qu'**
on compare la structure et/ou la longueur d'une trame à une structure et/ou une longueur prédéfinies et en cas de différence on conclut à un défaut.

5. Procédé selon la revendication 1,
**caractérisé en ce qu'**
au moins l'une des informations de longueur ou de structure de la première trame et de la seconde trame sont comparées entre elles au moins en partie pour leur évaluation et on décide qu'il y a une erreur s'il n'y a pas concordance.

6. Procédé selon la revendication 1,
**caractérisé en ce que**
les informations sont transmises suivant un codage bifréquence ou un autre codage approprié de façon qu'indépendamment du contenu de l'information, on transmet en permanence des signaux par le réseau et en cas d'absence de signaux dans au moins un chemin de transmission, on décide qu'il y a une erreur.

7. Procédé selon les revendications 2, 4, 5, 6,
**caractérisé en ce que**
lorsqu'on décide qu'il y a une erreur dans un chemin de transmission, on coupe ou on bloque une entrée d'information d'un participant de façon que l'information ou la trame ne soient transmises que par l'autre chemin de transmission.

8. Procédé selon les revendications 2, 4, 5, 6,
**caractérisé en ce que**
comme test de fonctionnement, on prédéfinit qu'au moins un participant présente une erreur **en ce qu'**on modifie au moins partiellement l'une des informations de structure ou de longueur et on la transmet par le participant prédéfini comme présentant une erreur.

9. Procédé selon la revendication 1,
**caractérisé en ce qu'**
il est prévu un participant qui exerce une fonction maître c'est-à-dire qu'il commande la transmission de l'information dans le réseau **en ce qu'**il génère au moins une trame et prédéfinit la fréquence d'horloge de l'information notamment celle des données.

10. Procédé selon les revendications 2, 4, 5, 6 et 9,
**caractérisé en ce qu'**
en cas de décision d'erreur dans le maître, le participant qui suit directement le maître assure la fonction de maître.

11. Procédé selon la revendication 1,
**caractérisé en ce que**
l'information contient au moins une information de commande et une information de données, l'information de commande servant à commander la transmission de la trame.

12. Procédé selon la revendication 1,
**caractérisé en ce que**
l'information contient au moins une information d'état qui décrit l'état du réseau et l'information d'état correspond soit à l'état actuel du réseau, soit qu'elle est rapportée à la trame correspondante.

13. Procédé selon la revendication 12,
**caractérisé en ce que**
l'information d'état correspond à au moins une information de liaison qui représente l'état d'un chemin de transmission prédéfini.

14. Procédé selon la revendication 1,
**caractérisé en ce que**
pour au moins quatre participants, on transmet une troisième trame de même longueur et de même structure que les deux premières trames,
le quatrième participant recevant la première trame du troisième participant, la seconde trame du second participant et la troisième trame du premier participant et pour la seconde trame on contourne le troisième participant et pour la troisième trame, on contourne le second et le troisième participant.

15. Procédé selon la revendication 1 ou 14,
**caractérisé en ce que**
chaque participant comporte un premier nombre prédéterminé d'entrées qui correspond au nombre de chemins de transmission vers chacun des participants et à partir du premier nombre déterminé d'entrées, on coupe ou on bloque un second nombre quelconque d'entrées.

16. Dispositif de transmission d'informations dans un réseau comprenant au moins trois participants, ce dispositif comprenant des premiers moyens qui transmettent l'information dans au moins une première trame de longueur et de structure prédéfinies, et transmettent la première trame par un premier chemin de transmission en forme d'anneau vers le participant respectivement suivant qui est le second participant pour une direction de transmission prédéfinie,
**caractérisé en ce que**
les trames contiennent chacune des premières zones d'informations correspondant au nombre de participants, et une première zone d'information, est associée de manière univoque à chaque participant,
des seconds moyens sont prévus qui transmettent l'information en plus dans une seconde trame de même longueur et de même structure que dans la première trame et les secondes trames sont transmises suivant un second chemin de transmission vers le second participant suivant qui est le troisième participant, et le second chemin de transmission et ainsi la seconde trame contournent le second participant, et
des troisièmes moyens sont prévus qui assurent une exploitation en fonction d'au moins une information de longueur ou de structure.

17. Dispositif selon la revendication 16,
**caractérisé en ce que**
pour au moins quatre participants, il comporte des quatrièmes moyens qui transmettent une troisième trame de même longueur et de même structure que les deux premières trames, et
les premiers moyens transmettent au quatrième participant, la première trame du troisième participant et les seconds moyens transmettent la seconde trame du second participant, et les quatrièmes moyens transmettent la troisième trame du premier participant, et la seconde trame contourne le troisième participant et la troisième trame contourne le second et le troisième participants.

18. Dispositif selon la revendication 16 ou 17,
**caractérisé en ce que**
chaque participant comporte un premier nombre d'entrées correspondant au nombre de chemins de transmission vers les différents participants,
des cinquièmes moyens étant prévus pour couper ou bloquer un second nombre quelconque d'entrées parmi le premier nombre prédéfini d'entrées.

19. Réseau de transmission d'information comprenant au moins trois participants,
**caractérisé en ce qu'**
il comporte des dispositifs selon au moins les revendications 16, 17 ou 18.
